# FASCICULE DE BREVET EUROPEEN

(11) **EP 0 423 022 B1**
(45) Date de publication et mention de la délivrance du brevet: **29.12.1993**
(21) Numéro de dépôt: 90402811.5
(22) Date de dépôt: 09.10.1990
(51) Int. Cl.: F16B 37/04

(54) **Perfectionnements aux dispositifs de fixation à cage du type aveugle**
Käfigmuttern zur Blindbefestigung
Caged nuts for blind fastening

(30) Priorité: 12.10.1989 FR 8913344
(43) Date de publication de la demande: 17.04.1991
(73) Titulaire: COMPAGNIE DE MATERIEL ET D'EQUIPEMENTS TECHNIQUES C.O.M.E.T., F-60304 Senlis Cedex (FR)
(72) Inventeur: Chrzastek, Bogdan, F-77600 Bussy Saint Georges (FR)
(74) Mandataire: Behaghel, Pierre

(56) Documents cités:
- DE-C- 1 153 572
- DE-C- 3 237 952
- FR-A- 1 432 960
- GB-A- 871 326

## Description

L'invention est relative aux dispositifs de fixation à cage du type aveugle, c'est-à-dire contenant dans leurs cages une pièce de vissage prisonnière (écrou ou vis) et agencés de façon à pouvoir être posés sur une tôle à partir de l'une des faces de cette tôle en vue de recevoir une pièce de vissage complémentaire (vis ou écrou) se présentant du côté de cette même face, en raison de l'inaccessibilité de l'autre face due par exemple au fait que la tôle fait partie d'un caisson fermé au moins partiellement, comme il arrive fréquemment pour les carrosseries de véhicules.

Elle vise plus particulièrement, parmi ces dispositifs ceux qui comprennent d'une part une cage comportant elle-même un talon étroit prolongé par une semelle mince et large formant voile plat et, à son extrémité la plus éloignée du talon, une lèvre d'accrochage, et d'autre part au moins une partie allongée d'une pièce de vissage métallique.

Dans les modes de réalisation connus de ces dispositifs, qui sont destinés à coopérer avec des trous de forme rectangulaire poinçonnés dans la tôle, la mise en place du dispositif de fixation sur cette tôle exige des rotations successives de ce dispositif autour de deux axes perpendiculaires entre eux, ce qui est relativement long et fastidieux (voir le document FR-A-1 432 960).

L'invention a pour but, entre autres, de remédier à cet inconvénient en rendant les dispositifs de fixation du genre en question particulièrement faciles et rapides à monter et, dans certains modes de réalisation avantageux, tels qu'ils autorisent, après même leur montage sur la tôle, des basculements des pièces de vissage par rapport à cette tôle, comme il est requis pour certaines applications telles que la fixation de crics sur les carrosseries de véhicules.

A cet effet, une fixation du genre en question est essentiellement caractérisé en ce que, le trou présentant une forme de T épais, le talon est relativement épais et disposé à une extrémité de la cage, la partie allongée métallique est logée dans la portion, du talon, raccordée à la semelle et la lèvre est disposée à l'extrémité d'un ressaut raccordé au talon et renforçant la semelle, l'ensemble de ces composants étant dimensionné de façon telle que, lorsque la cage est en place dans le trou, le talon soit logé jointivement dans le pied du trou, le voile plat recouvre jointivement la tête de ce trou ainsi que le bord délimitant cette tête du côté de la face accessible de la tôle, le ressaut soit logé dans la tête du trou, la lèvre bute contre le bord, du trou, opposé à son pied, et la pièce de vissage métallique, propre à traverser la tête du trou, vienne buter contre les deux portées, de la tôle, qui délimitent latéralement le pied du trou au voisinage de sa tête du côté de la face inaccessible de la tôle.

Dans des modes de réalisation avantageux, on a recours en outre à l'une et/ou à l'autre des dispositions suivantes :
- le talon est fendu de façon telle que son extrémité la plus éloignée de la lèvre puisse être rapprochée élastiquement de celle-ci pour permettre le clipsage de cette lèvre sur le bord correspondant du trou en T évidé dans la tôle,
- la cage est évidée par deux lumières latérales traversées par les deux bras de la portion allongée de la pièce de vissage,
- les lumières selon l'alinéa précédent sont fermées du côté du fond de la cage,
- dans une cage selon l'alinéa précédent, l'une seulement des lumières est ouverte du côté opposé au fond de la cage,
- la portion allongée de la pièce de vissage est la tête en forme de petit maillet d'une vis et la cage est évidée, du côté opposé à son fond, par une ouverture allongée rendant possibles les basculements de la vis dans cette cage autour de l'axe de sa tête cylindrique.

L'invention comprend, mises à part ces dispositions principales, certaines. autres dispositions qui s'utilisent de préférence en même temps et dont il sera plus explicitement question ci-après.

Dans ce qui suit, l'on va décrire deux modes de réalisation préférés de l'invention en se référant aux dessins ci-annexés d'une manière bien entendu non limitative.

La figure 1, de ces dessins, montre en plan un dispositif de fixation établi selon l'invention.

Les figures 2 et 3 montrent respectivement en vue latérale et en coupe selon III-III, figure 1, l'ensemble du dispositif ci-dessus et d'une tôle sur laquelle il est fixé.

Les figures 4 et 5 montrent respectivement en vue latérale et en vue en plan une variante de dispositif de fixation également conforme à l'invention.

La figure 6 montre la forme des trous poinçonnés dans les tôles avec lesquels peut coopérer le dispositif de fixation des figures 4 et 5.

On désire fixer une pièce de vissage (écrou 2 ou vis 3) sur une tôle 1 à "l'aveugle", expression signifiant que ladite tôle est accessible seulement de l'un de ses côtés, comme il est fréquent dans le domaine des carrosseries d'automobiles, ladite pièce de vissage étant propre à coopérer par vis sage avec une pièce complémentaire (vis ou écrou) aux fins de fixation sur ladite tôle d'un objet de toute nature désirable tel qu'une seconde tôle ou qu'un accessoire, notamment un cric de véhicule.

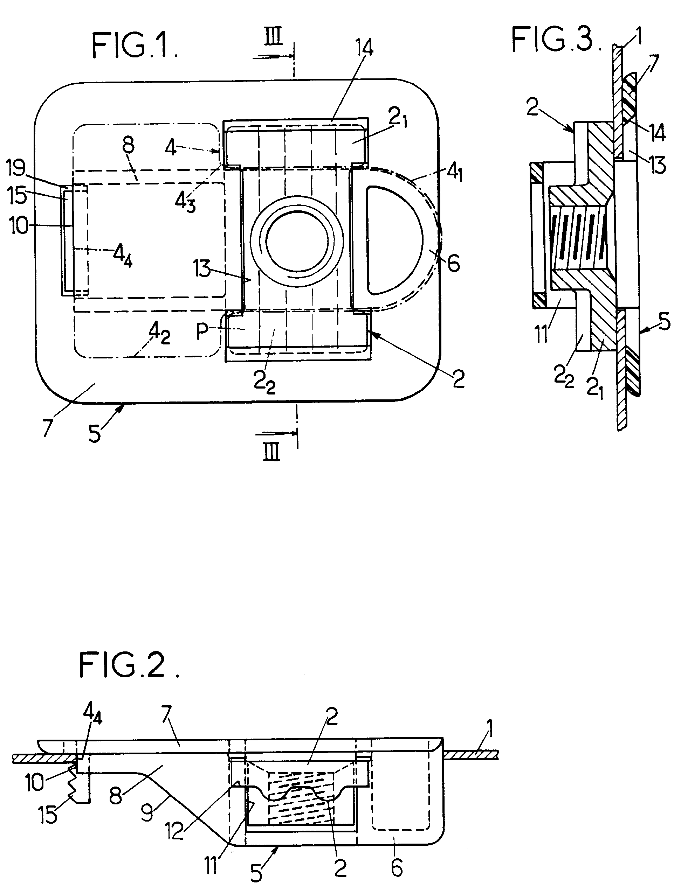

A cet effet, on évide dans la tôle 1 un trou 4 présentant la forme générale d'un T épais avec pied 4₁ et tête 4₂, chaque extrémité de pied ou de tête étant délimitée par un demi-cercle et les zones de raccordement du pied à la tête étant elles-mêmes délimitées de préférence par des arrondis ainsi que visible en 4₃ sur les figures 1 et 6.

Pour simplifier la description, on supposera dans ce qui suit, à titre purement illustratif et bien entendu non limitatif, que la face accessible de la tôle est sa face supérieure.

Pour coopérer avec le trou 4, on a recours à une cage 5 en matière plastique comprenant :
- un talon 6 relativement épais et étroit agencé de façon à pouvoir être logé jointivement dans le pied 4₁ du trou 4,
- et une semelle relativement mince et large présentant, d'une part, un voile plat 7 propre à recouvrir jointivement la tête 4₂ du trou 4 et la face supérieure du bord qui la délimite et, d'autre part, un ressaut inférieur 8 raccordé par une rampe 9 au talon 6 et se terminant par une lèvre 10 propre à buter contre le bord 4₄, du trou 4, le plus éloigné de son pied 4₁.

La portion, du talon 6, qui est raccordée à la semelle sert de logement ou de cage proprement dite pour une portion allongée de la pièce de vissage métallique 2 ou 3.

Dans le mode de réalisation illustré sur les figures 1 à 3, cette pièce de vissage est un écrou 2 comprenant deux ailes plates 2₁ nervurées en 2₂.

Chacune de ces deux ailes 2₁ présente la forme générale d'un T à pied large et traverse horizontalement une lumière 11 évidée dans le talon 6 de façon à reposer sur deux portées 12 longeant cette lumière 11.

Les dimensions desdites ailes 2₁ sont telles que l'écrou 2 puisse traverser verticalement avec un faible jeu la tête 4₂ du trou 4.

Le voile 7 s'étend ici autour de la totalité de la cage 5 et est évidé par un trou 13 dont le pourtour est semblable au contour de l'écrou 2 et un peu plus grand que ce contour à l'exception de deux lèvres 14 propres à recouvrir légèrement les deux petits côtés extrêmes dudit écrou.

On peut ainsi placer cet écrou dans son logement à travers le trou 13, moyennant des déformations élastiques des lèvres 14, le retour en place de ces lèvres empêchant ensuite un dégagement involontaire de l'écrou à travers le trou 13.

Pour monter la cage 5 garnie de son écrou 2 sur la tôle 1 au niveau d'un trou 4 poinçonné dans cette tôle, on procède comme suit.

On introduit d'abord la portion centrale de la cage 5, comprenant l'écrou, dans la tête 4₂ du trou.

Cette cage 5 se présente alors obliquement par rapport à la tôle 1, le talon 6 étant introduit dans la zone, du pied 4₁ du trou, la plus proche de sa tête et la semelle de la cage prenant appui contre le bord 4₄ du trou au niveau de ses rampes 9.

Lorsque les ailes de l'écrou 2 sont suffisamment enfoncées pour être totalement au-dessous de la tôle 1, on déplace l'ensemble de la cage vers la base du pied 4₁ du trou, ce qui fait passer lesdites ailes sous les plages P de la tôle, qui bordent ledit pied 4₁ au voisinage de la tête 4₂ : les rampes 9 glissent alors le long du bord 4₄ du trou, ce qui redresse progressivement la cage.

A la fin de cette course de coulissement, le talon 6 vient buter contre le fond du pied 4₁.

C'est exactement à cet instant que la lèvre 10 parvient au niveau du bord 4₄ et il suffit alors d'exercer un léger appui vers le bas sur le bout de la semelle pour obtenir un glissement vertical de la lèvre contre le bord 4₄ considéré et ainsi leur accrochage mutuel.

Cet accrochage est ferme du fait de la pression horizontale d'appui mutuel des deux éléments considérés en raison de la légère élasticité de la matière plastique, le dimensionnement de la cage étant prévu de façon telle qu'on observe alors une sorte d'engagement forcé de la cage dans le trou.

Mais ledit accrochage peut être éventuellement renforcé par un effet de clipsage faisant intervenir l'effacement provisoire d'une butée élastique et le retour subséquent de cette butée en sa position initiale par un effet de déclic. Une telle butée est par exemple constituée par les nervures qui ont été désignées par la référence 15 sur les figures 1, 2, 4 et 5.

Dans le cas de la figure 2, on voit une multiplicité de telles nervures 15 qui permettent d'adapter la cage à des tôles 1 d'épaisseurs différentes.

Des fentes 19 peuvent être évidées le long des flancs des nervures 15 pour faciliter les déformations de ces dernières.

Après l'accrochage signalé de la lèvre 10 sur le bord 4₄, le montage de la cage 5 sur la tôle 1 est achevé, l'écrou 2 est solidement mis en place dans le trou 4 et toute vis désirable peut être vissée dans cet écrou pour les fixations désirées.

Lors du vissage d'une telle vis sur ledit écrou, les ailes de ce dernier viennent prendre appui verticalement vers le haut contre les plages P, lesquelles opposent bien entendu la résistance désirée à tout effort d'arrachement de l'écrou en dehors de la tôle.

Il est à noter qu'alors aucun effort n'est exercé vers le haut sur la cage 5 elle-même de sorte que celle-ci demeure en place malgré l'exercice d'efforts verticaux sur l'écrou.

Il est à noter également que, lors des vissages indiqués, la cage 5 ne peut pas tourner dans son logement, ni donc l'écrou qu'elle contient.

Il est à noter encore que la surface des plages P peut être facilement modifiée et en particulier augmentée : il suffit à cet effet de modifier les dimensions horizontales des ailes 2₁ de l'écrou et, corrélativement, celles de la tête 4₂ du trou 4 tout en conservant inchangées celles du talon 6 et du pied 4₁ du trou.

Pour démonter le dispositif, il suffit d'exercer sur la semelle de la cage 5 un effort suffisant vers le haut pour dégager la lèvre 10 du bord 4₄ du trou 4, puis de faire glisser la cage 5 contre ce bord dans le sens inverse de celui adopté lors du montage pour dégager cette cage, son écrou 2 traversant à nouveau vers le haut la tête 4₂ du trou 4.

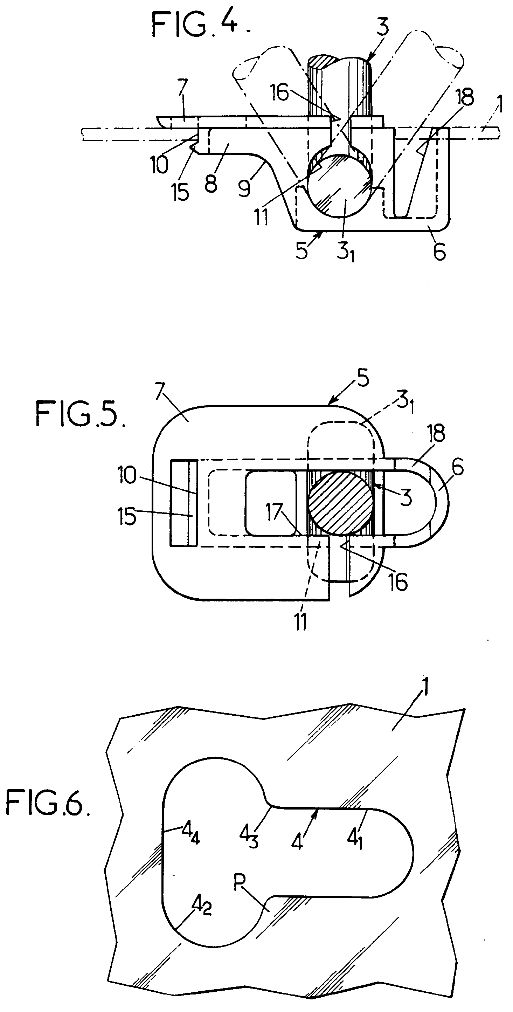

Dans la variante illustrée sur les figures 4 à 6, on retrouve la plupart des éléments qui ont été décrits à propos des figures 1 à 3, lesquels sont représentés avec les mêmes références que précédemment.

Les principales différences entre cette variante et le mode de réalisation précédent sont décrites ci-après.

L'écrou 2 précédent est ici remplacé par la tête allongée 3₁, en forme de rouleau cylindrique, d'une vis 3 se présentant sous la forme d'un petit maillet, et les deux ouvertures 11 de la cage 5 dans lesquelles sont logées respectivement les deux moitiés de la tête se présentent ici sous la forme d'alésages sensiblement circulaires constituant des paliers pour ces moitiés.

Comme visible sur les figures 4 et 5, l'un seulement de ces deux alésages 11 est ouvert du côté du voile 7 selon un passage étranglé 16, ce qui permet la mise en place de la tête du maillet dans la cage moyennant une présentation en biais de cette tête et une déformation de la portion, de la cage, délimitant le passage étranglé 16.

Une seconde différence réside en ce que le voile 7 est évidé par une fenêtre allongée 17 permettant les basculements de la vis 3, comme représenté en traits mixtes sur la figure 4, même après montage de la cage sur la tôle.

De tels basculements peuvent être requis pour certaines applications telles que la fixation d'un cric de véhicule sur certains éléments de carrosserie.

Une autre différence réside en ce que le talon 6 est fendu en 18, ce qui facilite les déformations élastiques de son extrémité en forme de bec destiné à venir en contact avec le fond du pied 4₁ : de telles déformations peuvent se révéler intéressantes pour réaliser le clipsage de la lèvre 10 dont question ci-dessus.

Les opérations de montage et de démontage de la cage sont, pour cette variante, exactement les mêmes que celles décrites à propos du premier mode de réalisation.

Ici encore, comme précédemment, après montage de la cage sur la tôle, la vis est solidement accrochée sur cette tôle, l'appui de la tête de maillet 3₁ contre les plages P de ladite tôle s'opposant à tout arrachement de la vis 3 et aucune sollicitation au démontage n'étant exercée sur la cage 5 lors de l'utilisation de la vis 3 pour la fixation.

En suite de quoi et quel que soit le mode de réalisation adopté, on obtient finalement un dispositif de fixation dont la constitution et la mise en oeuvre résultent suffisamment de ce qui précède.

Ces dispositifs présentent un grand nombre d'avantages par rapport à ceux antérieurement connus et en particulier les suivants :
- rapidité et simplicité du montage et du démontage,
- résistance offerte par la pièce de vissage montée sur la tôle aussi bien aux efforts d'arrachement qu'aux couples exercés sur elle,
- faible saillie formée par la cage sur la face inaccessible de la tôle,
- dans le cas où la pièce de vissage est une vis, possibilité de basculement de celle-ci même après son montage,
- absence d'angle vif dans le contour des trous poinçonnés dans la tôle pour la réception des dispositifs concernés.

Comme il va de soi, et comme il résulte d'ailleurs déjà de ce qui précède, l'invention ne se limite nullement à ceux de ses modes d'application et de réalisation qui ont été plus spécialement envisagés elle en embrasse, au contraire, toutes les variantes, notamment celles où la cage 5 serait constituée en métal au lieu de l'être en matière plastique, cas dans lequel ce seraient les deux alésages ou lumières 11 qui seraient ouverts du côté du voile 7 selon des passages étranglés 16 et non pas un seul, comme dans le mode de réalisation ci-dessus décrit, vu que le métal est moins déformable que la matière plastique et que, par consequent la prévision d'un seul passage 16 pourrait rendre difficile le montage de la pièce de vissage dans la cage.

## Revendications

1. Fixation du type aveugle dans un trou (4) poinçonné dans une tôle (1), comprenant, d'une part, une cage (5) comportant elle-même un talon étroit (6) prolongé par une semelle mince et large formant voile plat (7) et, à son extrémité la plus éloignée du talon, une lèvre d'accrochage (10) et, d'autre part, au moins une partie allongée (2₁,3₁) d'une pièce de vissage métallique (2,3), caractérisé en ce que, le trou (4) présentant une forme de T épais, le talon (6) est relativement épais et disposé à une extrémité de la cage (5), la partie allongée métallique (2₁,3₁) est logée dans la portion, du talon, raccordée à la semelle (7) et la lèvre (10) est disposée à l'extrémité d'un ressaut (8) raccordé au talon et renforçant la semelle, l'ensemble de ces composants étant dimensionné de façon telle que, lorsque la cage est en place dans le trou, le talon (6) soit logé jointivement dans le pied (4₁) du trou, le voile plat (7) recouvre jointivement la tête (4₂) de ce trou ainsi que le bord délimitant cette tête du côté de la face accessible de la tôle, le ressaut (8) soit logé dans la tête du trou, la lèvre (10) bute contre le bord (4₄), du trou, opposé à son pied, et la pièce de vissage métallique (2,3), propre à traverser la tête du trou, vienne buter contre les deux portées (P), de la tôle, qui délimitent latéralement le pied du trou au voisinage de sa tête du côté de la face inaccessible de la tôle.

2. Fixation selon la revendication 1, caractérisé en ce que le talon (6) est fendu (en 18) de façon telle que son extrémité la plus éloignée de la lèvre (10) puisse être rapprochée élastiquement de celle-ci pour permettre le clipsage de cette lèvre sur le bord correspondant (4₄) du trou en T (4) évidé dans la tôle (1).

3. Fixation selon l'une quelconque des précédentes revendications, caractérisé en ce que la cage (5) est évidée par deux lumières latérale (11) traversées par les deux bras de la portion allongée de la pièce de vissage (2,3).

4. Fixation selon la revendication 3, caractérisé en ce que les lumières (11) sont fermées du côté du fond de la cage (5).

5. Fixation selon la revendication 4, caractérisé en ce que l'une seulement des lumières (11) est ouverte du côté opposé au fond de la cage (5).

6. Fixation selon l'une quelconque des précédentes revendications, caractérisé en ce que la portion allongée de la pièce de vissage est la tête en forme de petit maillet (3₁) d'une vis (3) et en ce que la cage (5) est évidée, du côté opposé à son fond, par une ouverture allongée (17) rendant possibles les basculements de la vis dans cette cage autour de l'axe de sa tête cylindrique.

## Patentansprüche

1. Blindbefestigung in einem in ein Blech (1) gestanztes Loch (4), die zum einen aus einem Käfig (5), der seinerseits mit einem schmalen Ansatz (6) versehen ist, der durch eine dünne und breite Platte verlängert ist, die eine ebene Abdeckung (7) und an ihrem am weitesten von dem Ansatz entfernten Ende eine Verriegelungslippe (10) bildet und zum anderen aus wenigstens einem länglichen Teil (2_{1,} 3₁ ) eines metallischen Gewindestückes (2, 3) besteht, dadurch gekennzeichnet, daß das Loch (4) die Form eines dicken T hat, daß der Ansatz (6) verhältnismäßig dick und an einem Ende des Käfigs (5) angeordnet ist, daß der längliche metallische Teil (2₁, 3₁) in dem Abschnitt des Ansatzes angeordnet ist, der mit der Abdeckung (7) verbunden ist, und daß die Lippe (10) am Ende einer Auskragung (8) angeordnet ist, die mit dem Ansatz verbunden ist und die Abdeckung verstärkt, wobei die Gesamtheit dieser Teile so dimensioniert ist, daß, wenn der Käfig seine Lage in dem Loch eingenommen hat, der Ansatz (6) dicht an dem Fußteil (4₁) des Loches anliegt, die ebene Abdeckung (7) den Kopfteil (4₂) des Loches ebenso wie den Rand, der diesen Kopfteil begrenzt auf der Seite der zugänglichen Oberfläche des Bleches dicht abdeckt, die Auskragung (8) innerhalb des Kopfteils des Loches sitzt, die Lippe (10) gegen den Rand (4₄) des Loches anstößt, der dessen Fußteil gegenüberliegt, und daß das metallische Gewindestück (2, 3), das den Kopfteil des Loches durchqueren kann, an den beiden Flächenbereichen (P) des Bleches zur Anlage kommt, die den Fußteil des Loches in der Nähe seines Kopfteils auf der Seite der nicht zugänglichen Oberfläche des Bleches seitlich begrenzen.

2. Blindbefestigung nach Anspruch 1, dadurch gekennzeichnet, daß der Ansatz (6) (bei 18) so geschlitzt ist, daß sein am weitesten von der Lippe (10) entferntes Ende elastisch näher an die Lippe heranschiebbar ist, um das Einrasten der Lippe an dem entsprechenden Rand (4₄) des T-förmigen Loches (4) zu ermöglichen, das in dem Blech (1) ausgenommen ist.

3. Blindbefestigung nach einem der vorhergehenden Ansprüche, dadurch gekennzeichnet, daß in dem Käfig (5) zwei seitliche Öffnungen (11) ausgenommen sind, durch die die beiden Arme des länglichen Abschnittes des Gewindestückes (2, 3) hindurchtreten.

4. Blindbefestigung nach Anspruch 3, dadurch gekennzeichnet, daß die Öffnungen (11) auf der Seite des Bodens des Käfigs (5) geschlossen sind.

5. Blindbefestigung nach Anspruch 4, dadurch gekennzeichnet, daß nur eine der Öffnungen (11) auf der dem Boden des Käfigs (5) gegenüberliegenden Seite offen ist.

6. Blindbefestigung nach einem der vorhergehenden Ansprüche, dadurch gekennzeichnet, daß der längliche Teil des Gewindestückes der Kopf einer Schraube (3) ist, die die Form eines kleinen Schlegels (3₁) hat, und daß der Käfig (5) auf der seinem Boden gegenüberliegenden Seite mit einer länglichen Öffnung (17) versehen ist, die Kippbewegungen der Schraube in dem Käfig um die Achse ihres zylindrischen Kopfes zuläßt.

## Claims

1. A fixing of the blind type in a hole (4) punched in a metal plate (1), comprising, on the one hand, a grommet (5) in turn comprising a narrow heel (6) continued in the form of a thin and wide baseplate forming a flat web (7) and, at its end furthest away from the heel, an engagement lip (10) and, on the other hand, at least one elongate part (2₁, 3₁) of a metal screwing element (2, 3), characterised in that the hole (4) is in the form of a thick T, the heel (6) is relatively thick and disposed at one end of the grommet (5), the metal elongate part (2₁, 3₁) is housed in that part of the heel which is connected to the baseplate (7) and the lip (10) is disposed at the end of a shoulder (8) connected to the heel and reinforcing the baseplate, the assembly of these elements being so dimensioned that when the grommet is in place in the hole the heel (6) is housed contiguously in the foot (4₁) of the hole, the flat web (7) contiguously covers the head (4₂) of said hole and the edge defining said head on the accessible surface side of the metal plate, the shoulder (8) is housed in the head of the hole, the lip (10) abuts the edge (4₄) of the hole remote from its foot and the metal screwing element (2, 3) adapted to traverse the head of the hole abuts the two surfaces (P) of the metal plate which laterally define the foot of the hole near its head on the inaccessible surface side of the metal plate.

2. A fixing according to claim 1, characterised in that the heel (6) is split (at 18) so that its end furthest away from the lip (10) can be elastically brought near the latter to enable said lip to be clipped on the corresponding edge (4₄) of the T-shaped hole (4) formed in the metal plate (1).

3. A fixing according to claim 1 or 2, characterised in that the grommet (5) is formed with two lateral slots (11) through which extend the two arms of the elongate part of the screwing element (2, 3).

4. A fixing according to claim 3, characterised in that the slots (11) are closed on the bottom side of the grommet (5).

5. A fixing according to claim 4, characterised in that only one of the slots (11) is open on the side remote from the bottom of the grommet (5).

6. A fixing according to any of the preceding claims, characterised in that the elongate part of the screwing element is the head in the shape of a small mallet (3₁) of a screw (3) and in that the grommet (5) has, on the side remote from its bottom, a elongate aperture (17) enabling the screw to pivot in said grommet about the axis of its cylindrical head.
